# EUROPÄISCHE PATENTSCHRIFT

(11) **EP 4 359 106 B1**
(45) Veröffentlichungstag und Bekanntmachung des Hinweises auf die Patenterteilung: **29.04.2026**
(21) Anmeldenummer: 22733349.9
(22) Anmeldetag: 08.06.2022
(51) Int. Cl.: B01D 46/00, B01D 46/48, B22F 10/77, B22F 12/00, B29C 64/357, B33Y 40/00

(54) **VERFAHREN ZUR ABREINIGUNG EINES FILTERS IN EINER FILTEREINRICHTUNG SOWIE FILTEREINRICHTUNG MIT EINEM FILTERGEHÄUSE**
METHOD FOR CLEANING A FILTER IN A FILTER DEVICE, AND FILTER DEVICE HAVING A FILTER HOUSING
PROCÉDÉ DE NETTOYAGE D'UN FILTRE DANS UN DISPOSITIF DE FILTRATION ET DISPOSITIF DE FILTRATION DOTÉ D'UN BOÎTIER DE FILTRE

(30) Priorität: 23.06.2021 DE 102021116264
(43) Veröffentlichungstag der Anmeldung: 01.05.2024
(73) Patentinhaber: Becker Additive Manufacturing Solutions GmbH, 82178 Puchheim (DE)
(72) Erfinder: DABRUCK, Markus, 42113 Wuppertal (DE); GÖRTZ, Pascal, 42349 Wuppertal (DE); RADAU, Christian, 58332 Schwelm (DE); RADERMACHER, Bernhard, 41352 Korschenbroich (DE); TSIPRAS, Evdokimos, 42287 Wuppertal (DE)
(74) Vertreter: Müller, Enno
(86) Internationale Anmeldenummer: PCT/EP2022/065451
(87) Internationale Veröffentlichungsnummer: WO 2022/268497

(56) Entgegenhaltungen:
- WO-A1-2021/151681
- WO-A1-2021/151938
- DE-A1- 102017 207 415
- DE-A1- 102020 102 034

## Beschreibung

### Gebiet der Technik

Die Erfindung betrifft zunächst ein Verfahren zur Abreinigung eines Filters in einer Filtereinrichtung mit einem Filtergehäuse und dem darin befindlichen Filter, wobei die Filtereinrichtung eine abnehmbaren Filtergut-Sammelkammer aufweist, in welcher Filtergut, das im Zuge der Abreinigung des Filters anfällt, überführt wird.

Auch betrifft die Erfindung eine Filtereinrichtung mit einem Filtergehäuse und einem darin befindlichen Filter, wobei die Filtereinrichtung eine abnehmbare Filtergut-Sammelkammer aufweist, in welcher Filtergut, das im Zuge der Abreinigung des Filters anfällt, überführt wird.

### Stand der Technik

Bei Metall-Druckeinrichtungen, wie beispielsweise Lasersinter- oder Laserschmelzanlagen, weiter beispielsweise sogenannte 3D-Laserdruckanlagen, ist es bekannt, der Kabine der Druckeinrichtung im Umwälzverfahren Prozessgas zuzuführen, das im Hinblick auf während des Metall-Druckvorganges insbesondere durch die große Hitzeeinwirkung entstehende Verunreinigungen (beispielsweise Schmauch), die insbesondere durch die Laseranwendung entstehen können, in einer Filtereinrichtung gereinigt beziehungsweise regeneriert wird.

Die Herstellung eines Druckstückes in der Metall-Druckeinrichtung erfolgt bevorzugt in einer durch das Prozessgas erreichten Schutzgasatmosphäre. So wird als Prozessgas in der Regel ein inertes Gas, wie beispielsweise Argon oder Stickstoff, genutzt, wobei weiter Argon oder Stickstoff als alleiniges Gas genutzt wird. Prinzipiell kann aber auch eine Mischung von Gasen, insbesondere also inerten Gasen, als Prozess- oder Schutzgas vorliegen. In der Regel wird angestrebt, dass die Atmosphäre, insbesondere in der Kabine, keinen oder praktisch keinen Sauerstoff enthält. Das die Filtereinrichtung durchströmende Medium ist somit im Falle der Metall-Druckeinrichtung das Prozessgas.

Je nach Größe und/oder Komplexität des zu erzeugenden Druckstücks kann sich ein solcher Druckvorgang durchaus über mehrere Stunden bis hin zu mehreren Tagen erstrecken.

Eine Metall-Druckeinrichtung ist beispielsweise bekannt aus der DE 10 2017 206 792 A1. Im Zusammenhang mit einer Filtereinrichtung ist eine solche Metall-Druckeinrichtung beispielsweise bekannt geworden aus der DE 20 2012 013 036 U1. Aus der DE 10 2015 118 746 A1 ist ein Verfahren zur Abreinigung eines Filters bekannt. Zudem ist in der DE 10 2019 132 349 A1 eine Filtereinrichtung der in Rede stehenden Art sowie ein Verfahren zur Abreinigung des Filters beschrieben.

Das im Zuge der Abreinigung des Filters in der Filterreinigung anfallende Filtergut besteht in der Regel aus einem hoch reaktiven Material. Entsprechend ergibt sich im Zuge der Entsorgung des Filterguts die erhöhte Gefahr einer Entzündung bei Verlassen der durch das Prozessgas gegebenen Schutzgas-Atmosphäre.

In diesem Zusammenhang ist es bekannt, insbesondere bei kleineren Anlagen, Einwegfilter einzusetzen, die mit Erreichen eines vorgegebenen Füllgrads entsorgt werden. Auch ist es bekannt, insbesondere Einwegfilter mit größerem Aufnahmevolumen, mit Wasser und/oder Öl zu fluten, wodurch eine Passivierung des Filtermaterials erreicht wird. Hiernach kann der Einwegfilter aus dem Gehäuse entfernt und entsorgt werden. Das Gehäuse wird nach einer Reinigung mit einem neuen Einwegfilter bestückt.

Auch sind diesbezüglich Lösungen bekannt, bei welchen in das Filtergehäuse kontinuierlich ein Brandhinderungsmittel, wie Kalk oder Gasgranulat, eingeblasen wird, sodass die gesamte Oberfläche des Filters benetzt ist und sich mit dem an dem Filter herausgefilterten Material vermischt. Im Abreinigungsprozess wird dieses Filtergut-Brandhinderungsmittel-Gemisch in eine Filtergut-Sammelkammer überführt. Dabei ergibt sich jedoch eine vergleichsweise relativ hohe Abfallmenge, was eine vergleichsweise häufige Leerung der Filtergut-Sammelkammer zur Folge hat.

Eine Abreinigung des Filters durch Aussprühen mit Öl ist im Hinblick auf die Entsorgung problematisch.

Aus der DE 10 2020 102 034 A1 ist eine Vorrichtung und ein Verfahren zur Abreinigung eines Filters bekannt. Es ist nur die Filtergut-Sammelkammer vorgesehen, die ein zum einmaligen Gebrauch bestimmter Einweg-Behälter sein kann. Vor Eintritt in die Filtergut-Sammelkammer wird das Filtergut hinsichtlich Reaktivität nicht behandelt.

Weiter ist aus der DE 10 2017 207 415 A1 eine Vorrichtung und ein Verfahren zur Abreinigung eines Filters bekannt. Hierbei wird das Filtergut auch unbehandelt in einen Sammelbehälter gegeben und dann einer dem Sammelbehälter nachgeschalteten Behandlungskammer zugeführt.

Aus der nicht vorveröffentlichten WO 2021/151 938 A1 ist es hinsichtlich des Verfahrens zur Abreinigung eines Filters und der Filtereinrichtung bekannt, zum Transport des Filtergutes aus dem Filter in den Reaktionsraum einen Gasstrom zu verwenden.

Bei einem aus der nicht vorveröffentlichten WO 2021/151 681 A1 bekannten Verfahren zur Abreinigung eines Filters und einer entsprechenden Filtereinrichtung ist es bekannt zum Transport des Filtergutes in die Sammelkammer nur die Schwerkraft wirken zu lassen.

### Zusammenfassung der Erfindung

Ausgehend von einem Stand der Technik, wie er etwa durch genannte DE 10 2020 102 034 A1 gegeben ist, stellt sich der Erfindung die Aufgabe, ein Verfahren sowie eine Filtereinrichtung der in Rede stehenden Art, insbesondere hinsichtlich der Filterabreinigung, unter Berücksichtigung der üblicherweise hohen Reaktivität des Filterguts zu verbessern.

Zur Lösung der Aufgabe ist zunächst wesentlich darauf abgestellt, dass zur Passivierung Sauerstoff eingeschleust wird, wobei der Sauerstoff in den Raum eingeblasen oder alternativ in den Raum durch eine entsprechende Unterdruck-Beaufschlagung eingesogen wird, wobei der Sauerstoff mittels Atmosphärenluft eingebracht wird und zugleich hiermit eine Verwirbelung des Filtergutes in dem Raum vorgenommen wird, und weiter darauf, dass die Atmosphärenluft sowohl zur Passievierung des Filtergutes als auch zum Transport in die Sammelkammer durch Ausblasen des Filtergutes aus dem Reaktorraum genutzt wird.

Vor der Filtergut-Sammelkammer in Überführungsrichtung des Filterguts kann ein abtrennbarer Raum vorgesehen sein, in dem das abgereinigte Filtergut hinsichtlich eines Abbaus von noch vorhandener Reaktivität behandelt wird, dass in dem Raum eine Verwirbelung des Filtergutes vorgenommen wird und dass die Filtergut-Sammelkammer nach einer gewissen Zeit, insbesondere nach mehreren Abreinigungszyklen, von der Filtereinrichtung abgenommen wird und der Inhalt einer Entsorgung zugeführt wird.

Bezüglich der Filtereinrichtung ist die Aufgabe durch den Gegenstand des Anspruches 6 gelöst, wobei insbesondere darauf abgestellt ist, dass die Filtergut-Sammelkammer nach einem Abreinigungszyklus, um den Inhalt einer Entsorgung zuzuführen, von der Filtereinrichtung abnehmbar ist und in den Raum Atmosphärenluft einschleusbar ist, wobei mittels der Atmosphärenluft neben der Passivierung eine Verwirbelung und auch eine Überführung des Filtergutes in die Filtergut-Sammelkammer durchführbar ist.

Zufolge des vorgeschlagenen Verfahrens sowie der vorgeschlagenen Ausgestaltung der Filtereinrichtung ist eine Passivierung des von dem Filter abgereinigten Filterguts vor Überführung in die Filtergut-Sammelkammer erreichbar. So kann weiter eine gezielte Passivierung in dem vorgesehenen, in Art eines Reaktors wirkenden, abtrennbaren Raums an den Zyklus der Abreinigung des Filters und integriert in das Abreinigungsverfahren erfolgen.

Die in dem bevorzugt schleusenartig abtrennbaren Raum vorzunehmende Behandlung des Filterguts kann so weit durchgeführt werden, dass abschließend das Filtergut hinsichtlich dessen Reaktivität vollständig oder nahezu vollständig passiviert ist. Auch kann eine solche Behandlung nur zu einer Teilpassivierung führen, sodass mit Überführung des behandelten Filterguts in die Filtergut-Sammelkammer gegebenenfalls noch eine vergleichsweise geringe Reaktivität des Filterguts gegeben sein kann. In diesem Fall kann zufolge der zuvor in dem Raum vorgenommenen Behandlung des Filterguts in der Filtergut-Sammelkammer selbsttätig eine Nach-Passivierung des Filterguts erfolgen.

Der hierzu vorgesehene Raum ist dabei insbesondere zu dem den Filter aufweisenden Filtergehäuse abtrennbar. So kann zur Herstellung einer solchen Abtrennung beispielsweise ein, weiter beispielsweise unterdruckgesteuertes, Ventil vorgesehen sein. Mit Öffnen des Ventils kann eine Überführung von, gegebenenfalls zuvor im Abreinigungsprozess von den Filter gelöstem, Filtergut aus dem Filtergehäuse in den Reaktor-Raum erreicht werden.

Bevorzugt wird in diesem Raum eine vergleichsweise kleine Menge an Filtergut passiviert, weiter bevorzugt die Menge an Filtergut, die im Zuge eines Abreinigungsprozesses anfällt.

In dem Raum ist eine Zwischenlagerung des hochreaktiven Filterguts gegeben, zur Behandlung des Filterguts vor einer Überführung in die Filtergut-Sammelkammer, insbesondere zum Abbau der Reaktivität des Filterguts. Während dieser Behandlung des Filterguts kann in vorteilhafter Weise der in dem Filtergehäuse vorgesehene Filter bis zum erneuten Erreichen eines bevorzugt vorgegebenen Filtergut-Aufnahmevolumens weiter zur Filterung des die Metall-Druckeinrichtung durchströmenden Prozessgases genutzt werden.

Das über die Zeit, insbesondere über mehrere Abreinigungs-Zyklen, sich in der Filtergut-Sammelkammer ansammelnde Filtergut kann abschließend zufolge der bereits zuvor durchgeführten Passivierung des Filterguts in einfachster Weise durch Leerung der Sammelkammer und gegebenenfalls Überführung in einen Transportbehälter oder dergleichen entsorgt werden.

In einer möglichen Ausgestaltung kann die Behandlung des Filterguts in dem abtrennbaren Raum durch eine Einschleusung von Sauerstoff vorgenommen werden. Das Filtergut wird in dem Reaktor-Raum entsprechend bevorzugt gezielt mit Sauerstoff in Berührung gebracht. Der Sauerstoff kann hierbei in den Raum eingeblasen oder alternativ in den Raum zufolge einer entsprechenden Unterdruck- Beaufschlagung eingesogen werden. Durch die Reaktion mit dem Sauerstoff wird die passivierende Reaktion des Filterguts erreicht.

Die das im Wesentlichen passivierte Filtergut aufnehmende Filtergut-Sammelkammer ist weiter bevorzugt mit Atmosphärenluft befüllt, sodass nach Überführung des in dem Raum mit Sauerstoff beaufschlagten Filterguts in die Sammelkammer eine Nachreaktion, beispielsweise ein Ausglimmen unter Luftatmosphäre, der Filtergut-Teilchen gegeben sein kann. Bei üblichen Herstellungsverfahren, beispielsweise 3D-Metall-Laserdruckverfahren, verbleibt für eine solche Nachreaktion ausreichend Zeit, da hierbei in der Regel der nächste Abreinigungs-Zyklus nach etwa 6 bis 48 Stunden neues Filtergut in die Sammelkammer einbringt.

Gemäß einem bevorzugten Verfahren wird der Sauerstoff mittels Atmosphärenluft eingebracht. So kann entsprechend gemäß einer möglichen Ausgestaltung zur Passivierung des in dem Raum zwischengelagerten Filterguts beispielsweise Umgebungsluft eingesaugt oder eingeblasen werden.

Zur weiter verbesserten Passivierung des Filterguts in dem Raum kann vorgesehen sein, dass vorzugsweise zugleich zu der Einschleusung von Sauerstoff eine Verwirbelung des Filterguts in dem Raum vorgenommen wird. Hieraus ergibt sich eine verbesserte Kontaktierung der Filtergut-Oberfläche mit dem Sauerstoff und somit eine verbesserte Reaktion. Die Passivierung des Filterguts kann so gegenüber einer Passivierung ohne Verwirbelung gegebenenfalls über einen kürzeren Zeitraum erfolgen.

Die Verwirbelung kann gemäß einer bevorzugten Ausgestaltung durch die Einschleusung des Sauerstoffs beziehungsweise der Atmosphärenluft erreicht werden. Der abtrennbare Reaktor-Raum kann labyrinthartige Strömungswege aufweisen, die zu der gewünschten Verwirbelung führen.

Auch kann durch die Einschleusung des Sauerstoffs beziehungsweise der Atmosphärenluft und der dadurch bevorzugt auch verursachten Verwirbelung neben der Passivierung überlagert auch eine Überführung des Filterguts in die Filtergut-Sammelkammer erreicht werden. Die bevorzugt eingeschleuste Atmosphärenluft dient entsprechend in bevorzugter Ausgestaltung sowohl zur Passivierung des Filterguts als auch zum Transport in die Sammelkammer durch Ausblasen des Filterguts aus dem Reaktor-Raum.

Durch die gezielte Reaktion mit Luftsauerstoff wird das Filtergut so weit passiviert, dass eine Gefährdung bei der Entsorgung des Filterguts ausgeschlossen ist. Der Filtergut-Sammelbehälter ist allein mit dem passivierten Filtergut und Atmosphärenluft gefüllt, sodass eine Entsorgung des Filterguts durch eine einfache Entleerung des Sammelbehälters vorgenommen werden kann. Auch ist ein solcher Sammelbehälter nach der Entleerung und entsprechender Re-Positionierung in der Filtereinrichtung ohne weitere Vorbereitungen, beispielsweise Evakuierungs- und/oder Befüllungsmaßnahmen, betriebsbereit.

Die Filtergut-Sammelkammer kann ein nutzbares Aufnahmevolumen von etwa 5.000 bis weiter etwa 15.000 cm³ aufweisen, gegebenenfalls aber auch bis zu 20.000 cm³ oder mehr.

Es kann sich weiter beispielsweise im Zuge einer durchgeführten Abreinigung ein Filtergutvolumen von etwa 15 bis 25 cm³ nach etwa 10 bis 14 Betriebsstunden, bevorzugt etwa 20 cm³ nach 12 Betriebsstunden, ergeben. Bei einer angenommenen maximal zulässigen Befüllung der Filtergut-Sammelkammer mit etwa 3.000 cm³ Filtergut ergeben sich etwa 120 bis 200 zulässige Filterabreinigungen beziehungsweise 1.500 bis 2.000 Betriebsstunden als Wechsel- beziehungsweise Entleerungsintervall für die Sammelkammer. Bei Filtersystemen mit beispielsweise zwei parallel arbeitenden Filtereinrichtungen verdoppelt sich die Zeit zwischen den Abreinigungsvorgängen, so dass dann bei weiterhin beispielsweise 120 bis 200 zulässigen Abreinigungsvorgängen pro Filtereinrichtung eine Gesamtbetriebszeit von 3.000 bis 4.000 Stunden erreicht wird, so dass jeder Behälter entsprechend erst nach 3.000 bis 4.000 Stunden entnommen und entleert werden muss. Bei einem 7-Tage-Betrieb der gesamten Anlage mit 90 % Verfügbarkeit kann somit in vorteilhafter Weise erst alle 6 Monate eine Entleerung einer Sammelkammer nötig sein.

### Kurze Beschreibung der Zeichnungen

Nachstehend ist die Erfindung anhand der beigefügten Zeichnung, die lediglich ein Ausführungsbeispiel darstellt, näher erläutert. Es zeigt:
- Fig. 1: in schematischer perspektivischer Darstellung eine Metall-Druckeinrichtung mit einem zugeordneten Filtermodul, aufweisend mehrere Filtereinrichtungen;
- Fig. 2: in perspektivischer Darstellung die Anordnung von drei strömungsmäßig parallelgeschalteten Filtereinrichtungen mit einem Umwälzgebläse und einem Mediumkühler;
- Fig. 3: eine schematische Schnittdarstellung durch eine Filtereinrichtung gemäß der Linie III-III in Figur 2, betreffend einen Verfah- rensschritt zur Filtrierung eines durch die Filtereinrichtung strömenden Mediums;
- Fig. 4: eine Schnittdarstellung gemäß Figur 3, jedoch betreffend eine versetzte Schnittebene;
- Fig. 5: eine der Figur 3 entsprechende Schnittdarstellung durch die Filtereinrichtung, betreffend einen Verfahrensschritt zur Evakuierung des Innenraumes eines Filtergehäuses;
- Fig. 6: eine Folgedarstellung zu Figur 5, betreffend einen Verfahrensschritt zur Abreinigung eines Filters in dem Filtergehäuse der Filtereinrichtung und Sammeln des abgeschiedenen Filterguts vor einem Schleusenventil;
- Fig. 7: die Vergrößerung des Bereiches VII in Figur 6;
- Fig. 8: eine der Figur 7 entsprechende Darstellung, betreffend eine Folgesituation nach Öffnen des Schleusenventils und Überführung des Filtergutes in einen zwischen dem Filtergehäuse und einem Filtergut-Sammelkammer zwischengeschalteten abtrennbaren Raum;
- Fig. 9: eine Folgedarstellung zu Figur 8, eine Passivierung des in dem Raum zwischengelagerten Füllguts und die Überführung des Füllguts in die Filtergut-Sammelkammer betreffend;
- Fig. 10: eine weitere Schnittdarstellung, betreffend eine Situation und Überführen des passivierten Füllguts in die Sammelkammer;

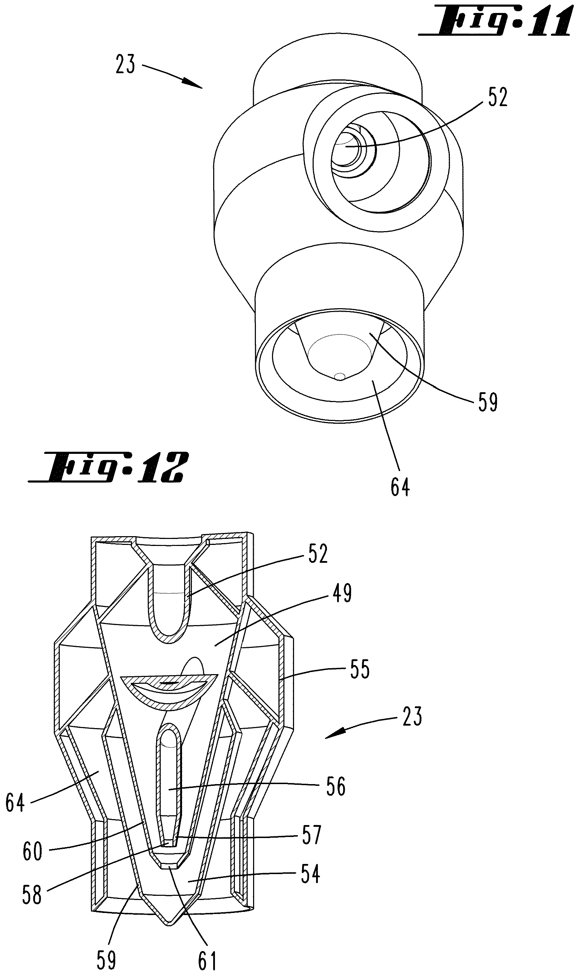

- Fig. 11: den zwischen dem Filtergehäuse und der Filtergut-Sammelkammer zwischengeschalteten, den abtrennbaren Raum aufweisenden Reaktor in einer perspektivischen Einzeldarstellung;
- Fig. 12: den Reaktor in einer Längsschnittdarstellung;
- Fig. 13: den Reaktor in einer weiteren Längsschnittdarstellung;
- Fig. 14: die von der Filtereinrichtung entnommene Filtergut-Sammelkammer in einer Anordnungsstellung an einem Transportfahrzeug;
- Fig. 15: eine Folgedarstellung zu Figur 14 nach Wenden der Filtergut-Sammelkammer in eine Entleerungsposition;
- Fig. 16: eine Folgedarstellung zur Figur 15 nach Anheben der Filtergut-Sammelkammer;
- Fig. 17: eine Situation im Zuge des Heranführens der Filtergut-Sammelkammer unter Nutzung des Transportfahrzeugs zu einem Entsorgungsbehälter;
- Fig. 18: eine Situation im Zuge des Andockens der Filtergut-Sammelkammer an den Entsorgungsbehälter;
- Fig. 19: die Entleerungssituation;
- Fig. 20: eine schematische Schnittdarstellung durch die Filtereinrichtung gemäß Figur 3, nach Wiederanordnung der entleerten Filtergut-Sammelkammer an der Filtereinrichtung.

### Beschreibung der Ausführungsformen

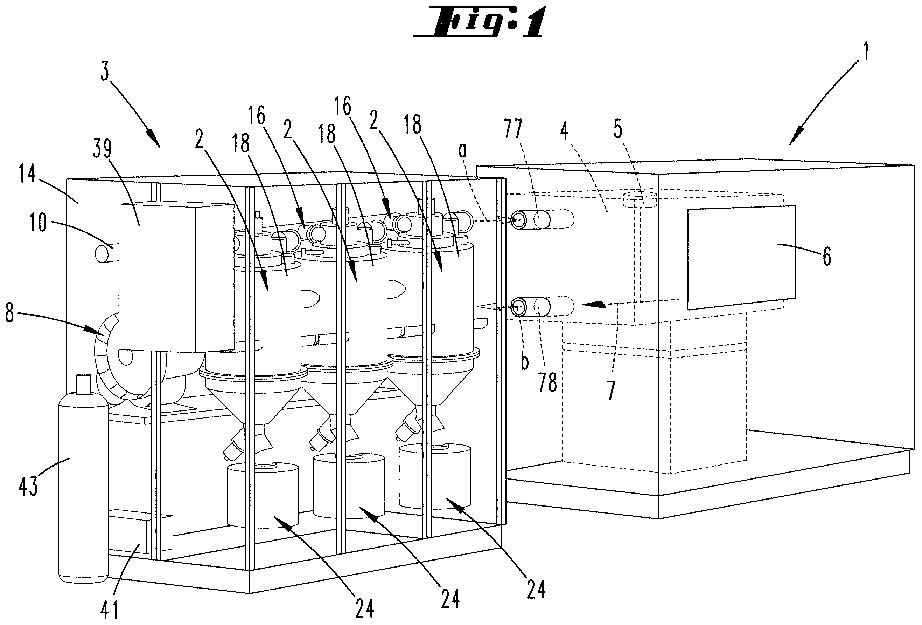

Dargestellt und beschrieben ist, zunächst mit Bezug zu Figur 1, eine Metall-Druckeinrichtung 1 mit einem zugeordneten, eine Vielzahl von Filtereinrichtungen 2 aufweisenden Filtermodul 3.

Die Metall-Druckeinrichtung 1 weist zunächst und im Wesentlichen eine Kabine 4 auf, in welcher der Metall-Druckvorgang durchgeführt werden kann. Hierbei wird zufolge selektiven Laserschmelzens aus feinem Metallpulver unter Einwirkung eines Laserstrahls schichtweise ein gewünschtes Bauteil hergestellt. Die Herstellung kann hierbei direkt aus sogenannten 3D-CAD-Daten erfolgen, sodass voll funktionsfähige Bauteile aus hochwertigen Metallen hergestellt werden können.

Neben der in Figur 1 nur schematisch dargestellten Laservorrichtung 5 ist weiter im Wesentlichen eine Auftragsvorrichtung zum Auftragen einer Metallpulverschicht Teil der Druckeinrichtung, darüber hinaus ein Pulver-Vorratsbehältnis, wie weiter auch ein Pulver-Sammelbehältnis, in welches hinein überschüssiges Pulver abgestreift werden können.

Die Herstellung des Metallteils erfolgt, in einer rundum geschlossenen Kabine 4, wozu diese gegebenenfalls mit einer die Kabine 3 verschließenden Tür 6 oder dergleichen versehen sein kann.

Bezüglich des Herstellungsvorganges wird beispielsweise auf die eingangs zitierte die DE 10 2017 206 792 A1 verwiesen.

Während des Druckvorganges erfolgt bevorzugt eine Regenerierung der Atmosphäre in der Kabine 3. Hierzu wird bevorzugt im Umwälzverfahren ein gasförmiges Prozessgas 7, das bevorzugt ein Schutzgas wie etwa Argon oder Stickstoff ist, in die Kabine 4 eingeblasen und zugleich abgesogen. Hierzu dient bevorzugt ein Gebläse 8, beispielsweise in Art eines Umwälzgebläses. Bei dem Gebläse 8 kann es sich um einen sogenannten Seitenkanalverdichter oder dergleichen handeln.

In dem dargestellten Ausführungsbeispiel ist das Gebläse 8 in dem Filtermodul 3 unter räumlicher Zuordnung zu den Filtereinrichtungen 2 angeordnet.

Hinsichtlich des Verfahrens zur Abreinigung des Filters wie auch bezüglich der Ausbildung der Filtereinrichtung wird auf die eingangs erwähnte DE 10 2019 132 349 A1 verwiesen. Der Inhalt dieser Patentanmeldung wird hiermit voll inhaltlich in die Offenbarung vorliegender Erfindung mit einbezogen, auch zu dem Zweck, Merkmale dieser Patenanmeldung in Ansprüche vorliegender Erfindung mit einzubeziehen.

Wie weiter auch insbesondere aus der schematischen Darstellung in Figur 1 zu erkennen, ist das Gebläse 8 über eine Druckleitung 9 und eine Saugleitung 10 sowie einen Einlass 77 und einen Auslass 78 mit dem Kabineninneren strömungsmäßig verbunden.

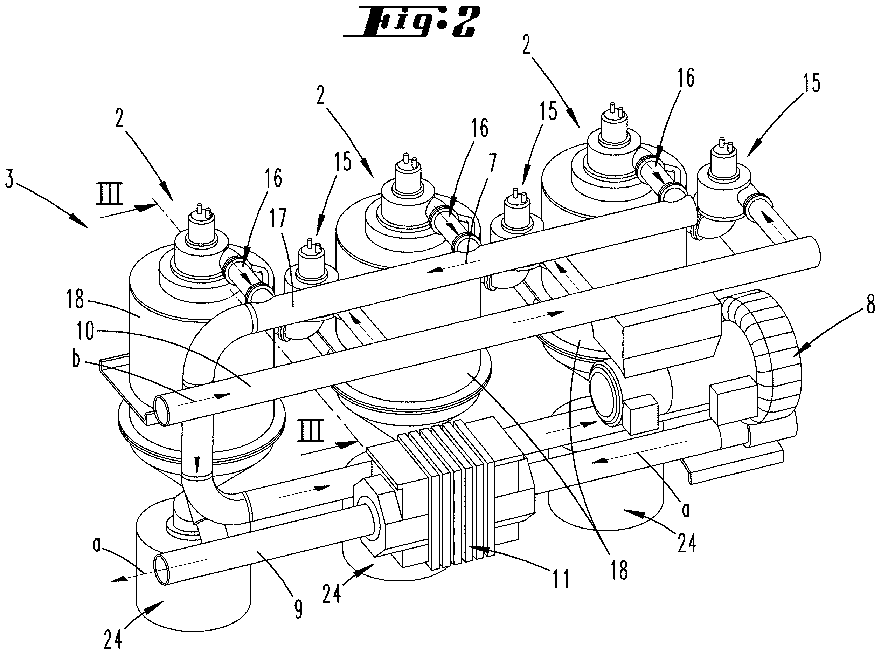

Hierbei kann die Druckleitung 9, ausgehend von dem Gebläse 8, unmittelbar, gegebenenfalls, wie in Figur 2 dargestellt, unter Zwischenschaltung eines Mediumkühlers 11, in die Kabine 3, bevorzugt zugeordnet einem Deckenbereich der Kabine 3, münden. Im Betrieb ergibt sich in der Druckleitung 9 eine Richtung a der Druckströmung des Mediums 7.

In die Saugleitung 10, entsprechend einer in Strömungsrichtung des Prozessgases 7 vor dem Gebläse 8, ist zumindest eine Filtereinrichtung 2 eingeschleift. Gemäß dem dargestellten Ausführungsbeispiel können mehrere Filtereinrichtungen 2, hier deren drei, vorgesehen sein.

Die Filtereinrichtungen 2 können zusammen mit dem Gebläse 8 und dem gegebenenfalls vorgesehenen Mediumkühler 11, darüber hinaus weiter gegebenenfalls mit einem optional vorsehbaren Vorabscheider und/oder einem Feinstfilter zusammengefasst in dem Filtermodul 3 angeordnet sein. Dieses Filtermodul 3 kann ein Filtergehäuse 14 aufweisen, welches die vorbeschriebenen Elemente umfasst. Es können sich lediglich zwei Schnittstellen jeweils zugeordnet der Druckleitung 9 und der Saugleitung 10 ergeben.

Ein gegebenenfalls vorgesehener Vorabscheider kann in Strömungsrichtung des Prozessgases 7 betrachtet vor der einen Filtereinrichtung 2 bzw. vor den mehreren Filtereinrichtungen 2 vorgesehen sein, während der Feinstfilter bezüglich der Filtereinrichtung 2 in Strömungsrichtung nachgeschaltet sein kann.

In der Saugleitung 10 ergibt sich bei einem üblichen Fertigungsprozess und einer damit einhergehenden Prozessgasumwälzung eine Richtung b der Saugströmung.

Die Filtereinrichtungen 2 sind bevorzugt in im Wesentlichen identischer Ausführung vorgesehen, hierbei jeweils einen Mediumeinlass 15 und einen Mediumauslass 16 aufweisend. Über den jeweiligen Mediumeinlass 15 ist jede Filtereinrichtung 2 bevorzugt unmittelbar mit der Saugleitung 10 verbunden. Die Mediumauslässe 16 der Filtereinrichtungen 2 münden in eine Saugübergangsleitung 17, die, gegebenenfalls unter Zwischenschaltung des Feinstfilters, zu dem Gebläse 8 führt (siehe insbesondere Figur 2).

Der Feinstfilter kann beispielsweise auch in Strömungsrichtung endseitig der Druckleitung 9, gegebenenfalls auch noch in Strömungsrichtung nach dem Mediumkühler 11 vorgesehen sein.

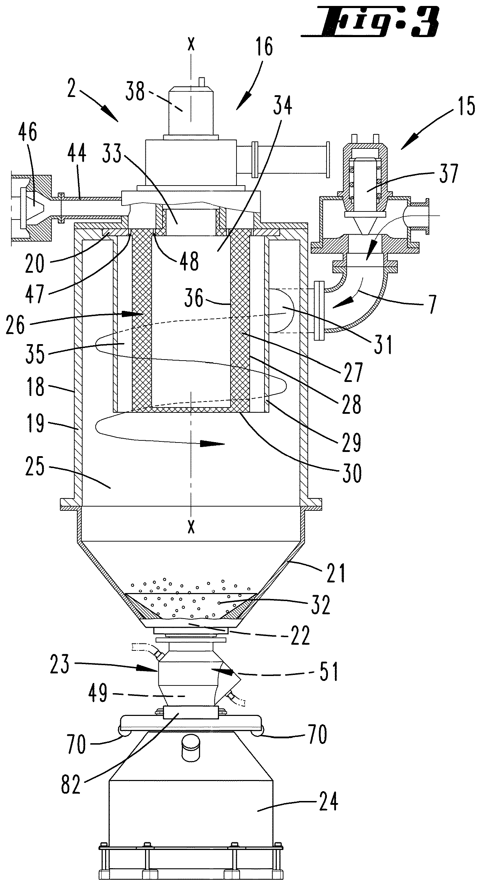

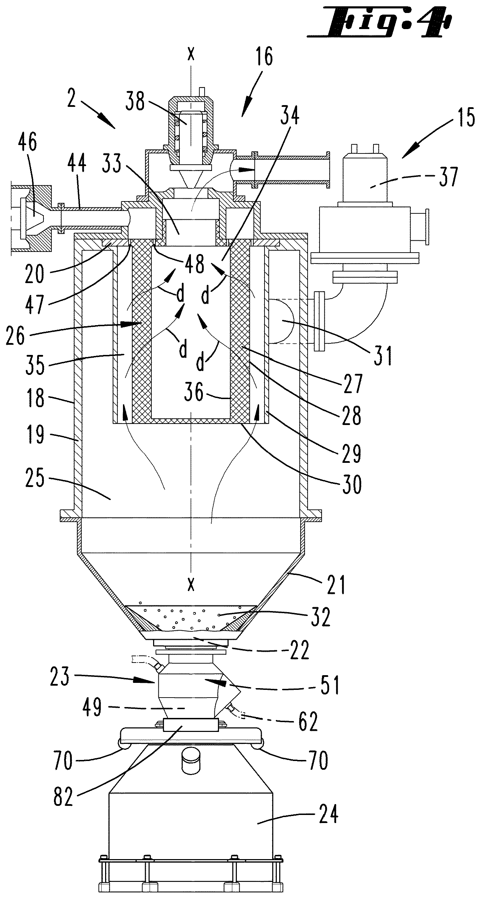

Die Figuren 3 und 4 zeigen jeweils eine - mit Bezug auf die übliche Betriebsstellung der Filtereinrichtung 2 - Vertikalschnittdarstellung durch eine der Filtereinrichtungen 2 im Regenerationsbetrieb, in welchem eine Filterung des aus der Kabine 4 ausgetragenen, beispielsweise durch Schmauch verunreinigten Mediums 7 durchgeführt wird.

Wie beispielsweise aus der Schnittdarstellung in Figur 3 ersichtlich, kann die Filtereinrichtung 2 ein etwa kreiszylinderförmiges Filtergehäuse 18 aufweisen, mit einer umlaufenden Gehäusewandung 19 und einer Gehäusedecke 20. Der Gehäuseboden 21 kann trichterförmig gestaltet sein mit einer zentralen Bodenöffnung 22, an die sich in einer Überführungsrichtung g eines Filterguts 32 ein Reaktorabschnitt 23 sowie eine von dem Filtergehäuse 18 abnehmbare Filtergut-Sammelkammer 24 anschließen kann.

Zwischen dem Filtergehäuse 18 und dem in dem Reaktorabschnitt 23 ausgebildeten Raum 49 ist ein über eine Druckfeder 50 in eine Schießstellung belastetes Schleusenventil 51 angeordnet.

Unterseitig der Gehäusedecke 20 kann gemäß den Darstellungen ein in den Innenraum 25 des Filtergehäuses 18 einragender Filter 26 angeordnet sein. Dessen Filterwandung kann, wie auch dargestellt, rohrartig, kreiszylindrisch ausgebildet sein, mit einer zentralen Längsachse x, die in üblicher Anordnungsstellung entlang einer Vertikalen ausgerichtet ist. Die Längsachse x des Filters 26 kann entsprechend dem dargestellten Ausführungsbeispiel zugleich die zentrale Längsachse des Filtergehäuses 18 insgesamt bilden.

Der Filter 26 ist mit Abstand zu der Außenfläche 28 der Filterwandung 27 umgeben von einer bevorzugt konzentrisch zur Längsachse x ausgerichteten Leitwandung 29. Diese Leitwandung 29 ist, wie auch der Filter 26, unterseitig der Gehäusedecke 20 quasi abgehängt und bevorzugt strömungsdicht mit dieser verbunden. Der sich zwischen der Leitwandung 29 und der Filterwandung 27 ergebende Ringraum 35 ist in Achsrichtung betrachtet hin zu dem Innenraum 25 offen ausgebildet, während die diesbezügliche, im üblichen Betrieb nach unten weisende Stirnfläche 30 des Filters 26 von der Strömung, insbesondere von dem Prozessgas 7 nicht durchdringbar ausgebildet ist. Hierbei abgeschiedenes Filtergut 32 kann allein schwerkraftabhängig durch die Bodenöffnung 22 des Gehäusebodens 21 in einen in den Raum 49 des Reaktorabschnitts 23 eintauchenden Kanalabschnitt 52 fallen. Dieser Kanalabschnitt 52 ist im Bereich des den Innenraum 25 des Filtergehäuses 18 abgewandten Ende zunächst durch einen Ventilteller 53 des Schleusenventil 51 verschlossen.

Die Einlassöffnung 31 des Mediumeinlasses 15 kann, wie auch bevorzugt, in der Gehäusewandung 19 vorgesehen sein, so dass sich eine zumindest annähernd tangentiale Einströmung des Mediums 7 in den Innenraum 25 des Filtergehäuses 18 ergeben kann, wodurch zunächst eine wirbelartige Vorabscheidung von Filtergut 32 erreicht wird (vergleiche Figur 3). Die Filtereinrichtung 2 wirkt hierbei zunächst in Art eines Zyklonabscheiders, in dem die Prozessgasströmung von der Einlassöffnung 31 ausgehend wirbelartig in dem sich zwischen der Leitwandung 29 und der Gehäusewandung 19 ergebenden Ringraum geführt ist.

Die Auslassöffnung 33 des Mediumauslasses 16 kann gemäß dem dargestellten Ausführungsbeispiel im Bereich der Gehäusedecke 20 vorgesehen sein, insbesondere, wie weiter auch bevorzugt, zentral, die Längsachse x aufnehmend und weiter zugeordnet dem durch die Filterwandung 27 umschlossenen Filterinnenraum 34.

Zufolge der sich im üblichen Betrieb (Filterbetrieb) der Filtereinrichtung 2 ergebenden Saugströmung wird das in den Innenraum 25 eingesaugte Prozessgas 7 nach der wirbelartigen Umlenkung zugeordnet der nach unten weisenden Stirnfläche 30 des Filters 26 von unten in den Ringraum 35 zwischen der Filterwandung 27 und der Leitwandung 29 gesaugt, wonach sich eine Durchdringung der Filterwandung 27 von der Außenfläche 28 zu der Innenfläche 36 der Filterwandung 27 ergibt (siehe Pfeile d in Figur 4), sodass das gefilterte Medium 7 den Filterinnenraum 34 erreicht und über die Auslassöffnung 33 die Filtereinrichtung 2 verlässt (vergleiche Figur 4).

Hierbei abgeschiedenes Filtergut 32 kann in der Filterwandung 27 verhaftet sein. Gegebenenfalls im Zuge dieser Filterung durch den Ringraum 35 abfallendes Filtergut 32 wird bevorzugt in der Filtergut-Sammelkammer 24 gesammelt.

Wie aus den Schnittdarstellungen beispielsweise in den Figuren 3 und 4 ersichtlich können der Mediumeinlass 15 und der Mediumauslass 16 jeweils mit einem Sperrventil 37 beziehungsweise 38 versehen sein, um so die Filtereinrichtung 2 zufolge Abriegelung gegenüber der Saugleitung 10 und der Saugübergangsleitung 17 aus dem Regenerationsbetrieb zu nehmen. Die Regeneration des Prozessgases 7 bei weiter im Betrieb befindlicher Metall-Druckeinrichtung 1 wird in einem solchen Zustand allein übernommen durch die weiteren Filtereinrichtungen 2 des Filtermoduls 3. So kann ein zumindest annähernd kontinuierlicher Betrieb der Metall-Druckeinrichtung 1 auch bei einem Ausfall oder einer bewussten Absperrung einer Filtereinrichtung 2, beispielsweise zur Reinigung derselben, sichergestellt werden.

Hierzu werden die bevorzugt pneumatisch betätigbaren Absperrventile 37 und 38 des Mediumeinlasses 15 und des Mediumauslasses 16 in eine Sperrstellung verbracht. Die diesbezügliche Ansteuerung der Absperrventile 37 und 38 kann, wird auch bevorzugt, über eine nicht näher dargestellte Steuerelektronik 39 erfolgen, die auch Teil des Filtermoduls 3 sein kann.

Zur Abreinigung des Filters 26 in der Filtereinrichtung 2 und zum Ablösen des sich im Zuge der Filterung des Prozessgases 7 absetzenden Filterkuchens an der Filterwandung 27 ist die Filtereinrichtung 2 in einen Regenerationsbetrieb versetzbar. Hierzu kann die Filtereinrichtung 2, wie vorbeschrieben, zunächst aus dem Durchlauf von Prozessgas entnommen bzw. gegenüber den Leitungen abgesperrt zufolge Schließen der Absperrventile 37 und 38 und somit Verschluss des Mediumeinlasses 15 und des Mediumauslasses 16.

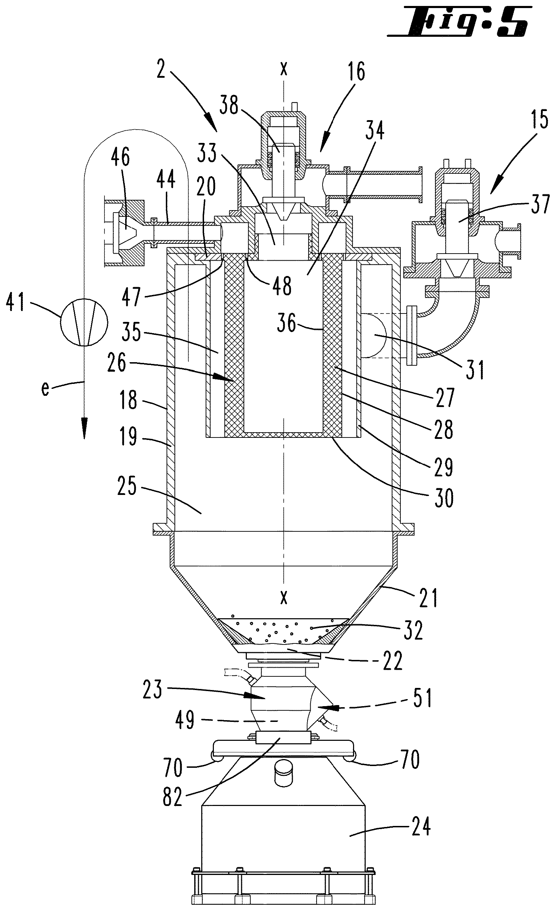

Über eine gesonderte Pumpe, insbesondere Vakuumpumpe 41, wird zur Vorbereitung des Abreinigungsvorganges zunächst in dem Filtergehäuse 18 ein Unterdruck erzeugt. Dabei wird der durch das Schleusenventil 51 in dem Reaktorabschnitt 23 abgesperrte Innenraum 25 des Filtergehäuses 18 evakuiert (siehe schematische Darstellung in Figur 5 - Pfeil e).

Bei der Vakuumpumpe 41, die bevorzugt auch Teil des Filtermoduls 3 sein kann, kann es sich, wie weiter auch bevorzugt, um eine beispielsweise ölgeschmierte Vakuumpumpe handeln, wie diese beispielsweise aus der DE 10 2015 107 721 A1 bekannt ist.

Nach Erreichen eines Unterdrucks von beispielsweise 500 mbar bis hin zu weiter beispielsweise 1 mbar im Bereich des Innenraumes 25 (erfassbar über einen Drucksensor) wird über die Steuerelektronik 29 der Absaugvorgang über die Vakuumpumpe 41 gestoppt.

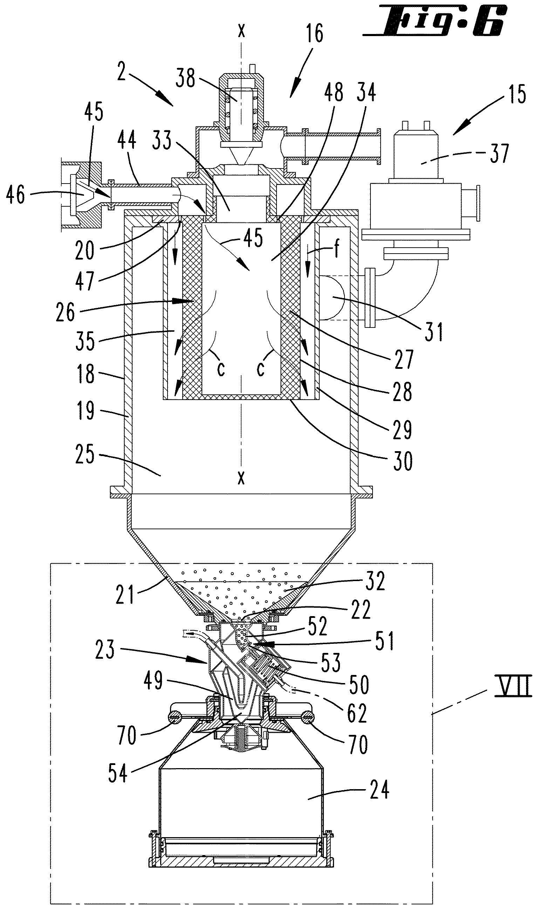

Über einen gesonderten Spülmediumspeicher 43, der auch Teil des Filtermoduls 3 sein kann, wird zur Abreinigung des Filters 26 über eine Spülleitung 44 ein Spülmedium 45 in Richtung auf die Filterwandung 27 eingebracht. Das Einbringen des Spülmediums 45 kann über ein bevorzugt elektrisch betätigbares Steuerventil 46 ausgelöst werden (siehe Figur 6). Das Steuerventil 46 kann über die Steuerelektronik 39 angesteuert werden.

Zufolge von beispielsweise in einer Mehrzahl um die Längsachse x herum vorgesehenen Spülmediumeinlässen 47 und 48 in der Gehäusedecke 20 ist das Spülmedium 45 einbringbar, wobei gemäß den Darstellungen über die Spülmediumeinlässe 48 das Spülmedium 45 derart in den Filterinnenraum 34 eingeleitet wird, dass dieses die Filterwandung 27 in einer Richtung c entgegen der Durchströmrichtung des Mediums 7 im üblichen Filterbetrieb (Richtung d - vergleiche Figur 4) durchsetzt. Es wird so entsprechend eine Durchsetzung der Filterwandung 27 von dem Spülmedium 45 von der Innenfläche 36 in Richtung auf die Außenfläche 28 erreicht.

Zugleich oder auch zeitlich versetzt zu der vorbeschriebenen Strömung wird über den radial äußeren Spülmediumeinlass 47 das Spülmedium 45 im Wesentlichen entlang der Außenfläche 28 der Filterwandung 27 eingeleitet (Richtung f), um so das insbesondere über den Spülmediumanteil, der die Filterwandung 27 von innen nach außen durchsetzt, gelöste Filtergut 32 sicher aus dem Ansaugbereich in Richtung auf den Gehäuseboden 21 abzutragen.

Die Einleitung des Spülmediums 45 kann allein zufolge Einsaugen aufgrund des gegenüber der Umgebung in dem Innenraum 25 des Filtergehäuses 18 herrschenden Unterdrucks erreicht sein, kombinativ hierzu aber gegebenenfalls auch durch ein Einblasen des Spülmediums 45 in den Innenraum 25. Durch den Unterdruck im Innenraum 25 ist eine günstige Spülmedium-Strömung über und durch die Filterwandung 27 sichergestellt.

Zum Ende des Abreinigungsvorganges herrscht in dem Innenraum 25 des Filtergehäuses 18 bevorzugt wieder der gleiche Druck, wie in den angeschlossenen Leitungen (Saugleitung 10 und Saugübergangsleitung 17), sodass beim Öffnen der Sperrventile 37 und 38, wodurch in diesem Beispielsfall das Wiedereinbinden der abgereinigten Filtereinrichtung in den Filterungsprozess erreicht wird, keine Rückströmung entgegen der üblichen Strömungsrichtung des Prozessgases 7 stattfindet.

Als Spülmedium 45 wird bevorzugt dasselbe Medium genutzt, das als Prozessgas auch zum Abtrag von Verunreinigungen in der Kabine 4 der MetallDruck-einrichtung 1 genutzt ist. So steht als Spülmedium 45 bevorzugt Argon und/oder Stickstoff genutzt.

Durch ein erneutes Evakuieren kann ggf. unmittelbar nach einem ersten Reinigungsvorgang auch ein zweiter Reinigungsvorgang nachgeschaltet werden.

Der in dem Reaktorabschnitt 23 ausgebildete Raum 49 formt zunächst eine in Richtung auf die Filtergut-Sammelkammer 24 sich verengende, trichterartige Reaktionskammer 54. In diese Reaktionskammer 54 ist das bodenseitig des Filtergehäuses 18, insbesondere im Bereich des Kanalabschnittes 52 gesammelte Filtergut 32 nach einer gesteuerten Freigabe zufolge Öffnen des Schleusenventils 51 abwerfbar.

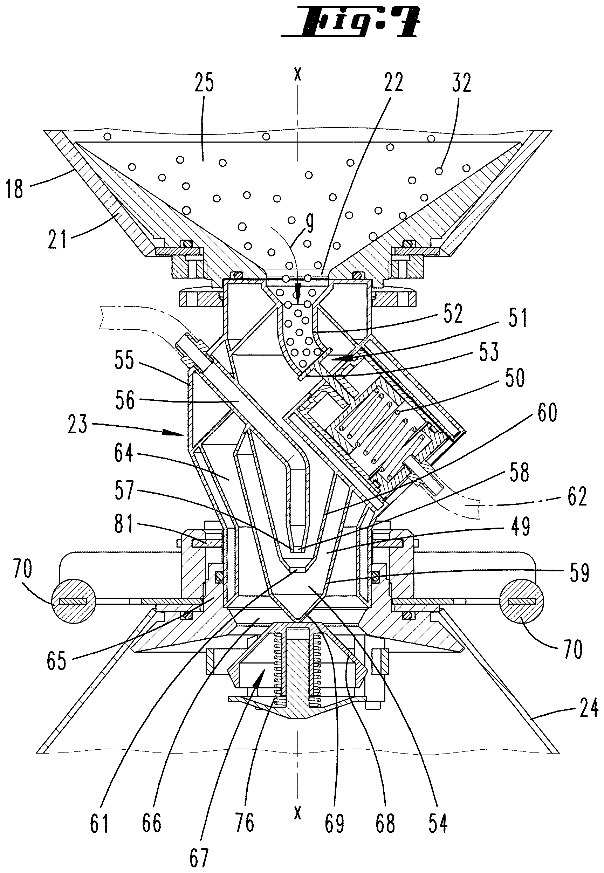

Die den Ventilteller 53 tragende Ventilstange sowie die insgesamt auf das Ventil wirkende Druckfeder 50 sind in einem zu dem Raum 49 gesonderten, gegebenenfalls von außen zugänglichen Abschnitt des Reaktorabschnitts 23 aufgenommen (vergleiche beispielsweise Figur 7).

In die Reaktionskammer 54 kann eine durch die Wandung 55 des Reaktorabschnitts 23 nach außen geführte Rohrleitung 56 münden, welche bevorzugt an eine Vakuumpumpe, weiter bevorzugt an die Vakuumpumpe 41, strömungsdicht angeschlossen ist. Ein dem Boden der Reaktionskammer 54 zugewandter Endabschnitt 57 der Rohrleitung 56 erstreckt sich bevorzugt entlang der Längsachse x, wobei weiter sich eine nach unten gerichtete Öffnung 58 dieses Endabschnitts 57 in ihrer Öffnungsebene bevorzugt in einer Richtung quer zur Längsachse x erstreckt.

Die Reaktionskammer 54 ist insgesamt bevorzugt doppelwandig trichterförmig ausgebildet, mit einer mit Bezug zu der Längsachse x radial äußeren Trichterwandung 59 und einer radial inneren Trichterwandung 60, sodass sich die Reaktionskammer 54 insgesamt trichterartig und ringförmig um die Längsachse x ergibt.

Die radial innere und dabei bei üblicher Ausrichtung der Filtereinrichtung 2 in Axialrichtung betrachtete obere Trichterwandung 60 weist weiter in ihrem Sickenbereich eine Öffnung 61 auf. Der Endabschnitt 57 der Rohrleitung 56 endet mit der Öffnung 58 mit einem etwa dem 1- bis 2-Fachen des Innendurchmessers der Rohrleitung 56 entsprechenden axialen Abstandsmaß oberhalb der Öffnung 61 in der Trichterwandung 60.

Bevorzugt ist auch das Schleusenventil 51 über eine Leitung 62 an die Vakuumpumpe 41 angeschlossen.

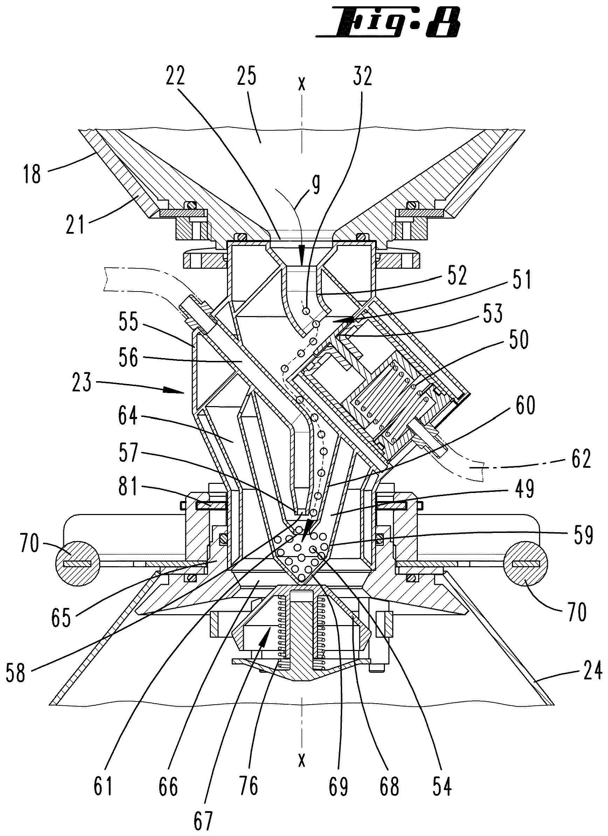

Zum Abwerfen des bodenseitig des Filtergehäuses 18 gesammelten Filterguts 32 in den Raum 49 beziehungsweise in die Reaktionskammer 54 des Reaktorabschnittes 23 wird über die Vakuumpumpe 41 und die Rohrleitung 56 in der Reaktionskammer 54, darüber hinaus in dem gesamten durch das geschlossene Schleusenventil 51 gegenüber dem Filtergehäuse 18 abgeschieberten Raum 49, ein Unterdruck erzeugt. Dieser Unterdruck kann über die Leitung 62 auch zum Öffnen des Schleusenventils 51 entgegen der Rückstellwirkung der Druckfeder 50 verwendet werden. Dabei wird das Schleusenventil 51 lediglich kurzzeitig geöffnet, jedoch ausreichend lang, um über den Unterdruck im Reaktorabschnitt 23 das Filtergut 32 aus dem Filtergehäuse 18 beziehungsweise dem Kanalabschnitt 52 heraus in die Reaktionskammer 54 zu saugen. Das Filtergut 32 gelangt dabei entlang der radial inneren Fläche der inneren Trichterwandung 60 in den Sickenbereich und durchtritt hier die Öffnung 61. Das Filtergut 32 liegt abschließend dieses Überleitungsvorganges bodenseitig in der trichterförmig ringförmigen Reaktionskammer 54 ein (vergleiche Figur 8).

Ein gegebenenfalls geringfügiger Überdruck in dem Filtergehäuse 18 schließt im Moment der Öffnung des Schleusenventils 51 ein Einströmen von Luft aus dem Raum 49 des Reaktorabschnitts 23 sicher aus.

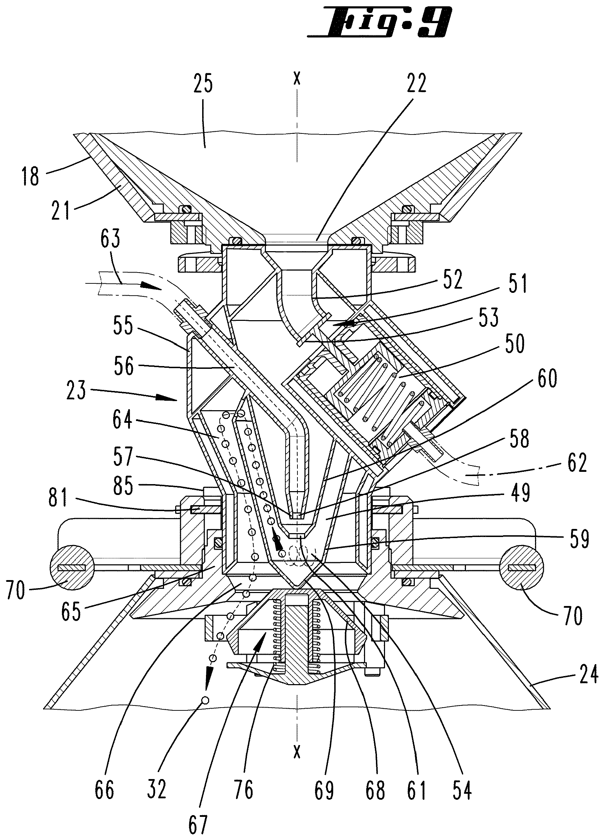

Sobald das Schleusenventil 51 wieder geschlossen ist, wird die Rohrleitung 56 bevorzugt zur Umgebung hin geöffnet. Der nunmehr über die als Spüldüse wirkende Rohrleitung 56 in das Vakuum des Raumes 49 einströmende Luftstrom ist zielgerichtet durch die Öffnung 61 in die Reaktionskammer 54 geführt. Dabei bewirkt dieser Luftstrom zugleich eine Verwirbelung des Filterguts 32 in der Reaktionskammer 54 und einen Transport des Filterguts 32 aus der Reaktionskammer 54 heraus in die Filtergut-Sammelkammer 24 (vergleiche Figur 9).

Im Zuge dieser Verwirbelung und des Transports wirkt das Filtergut 32 mit dem Sauerstoff in der eingesogenen und die Verwirbelung herbeiführenden Atmosphärenluft 63, sodass insbesondere im Zusammenhang mit der Verwirbelung eine Passivierung der üblicherweise reaktiven Filtergut-Partikel erreicht wird.

Durch den Luftstrom wird das Filtergut 32 - gegebenenfalls unter weiterer Passivierung - zwischen den Trichterwandungen 59 und 60 der Reaktionskammer 54 nach oben in Richtung auf das sich erweiternde Trichterende geblasen und endseitig in einen radial äußeren, die Reaktionskammer 54 im Wesentlichen umgebenden Ringraum 64 verbracht, aus welchen heraus, gegebenenfalls unter weiterer Luftstrombeaufschlagung, das Filtergut 32 in die Filtergut-Sammelkammer 24 gelangt.

In der unter Luftatmosphäre stehenden Filtergut-Sammelkammer 24 kann das passivierte Filtergut 32 bis zu einem nächsten Abreinigungs-Zyklus unter Luftsauerstoff gefahrlos nachreagieren.

Der Reaktorabschnitt 23 kann gemäß einer bevorzugten Ausgestaltung trotz der gegebenen Komplexität des Innenbereiches weitgehend ohne Stützstrukturen hergestellt sein, beispielsweise hergestellt in einem 3D-Metalldruck.

Weiter bevorzugt kann eine doppelwandig Außenkontur gegeben sein. Diese kann beispielsweise für eine aktive Kühlung, weiter beispielsweise Wasserkühlung, genutzt sein.

Das insgesamt rohrförmige freie Ende des den Ringraum 64 bildenden Abschnitts des Reaktorabschnitts 23 kann, wie auch bevorzugt, zur strömungsdichten Aufnahme eines Muffenabschnitts 65 der Filtergut-Sammelkammer 24 ausgebildet sein. Die von dem Muffenabschnitt 65 umgebende Kammeröffnung 66 ist bevorzugt verschließbar mittels eines Absperrventils 67. Ein in Richtung auf den Reaktorabschnitt 23 gerichteter Ventilkegel 68 kann dabei in der Andockstellung der Sammelkammer 24 an dem Reaktorabschnitt 23 abgestützt sein an einem Niederhalter 69, der in dem dargestellten Ausführungsbeispiel durch die nach unten weisende Fläche der äußeren Trichterwandungen 59 im Sickenbereich gebildet ist.

Das Absperrventil 67 ist entsprechend in einer die Kammeröffnung 66 freigebenden Stellung gehalten (vergleiche Figur 9).

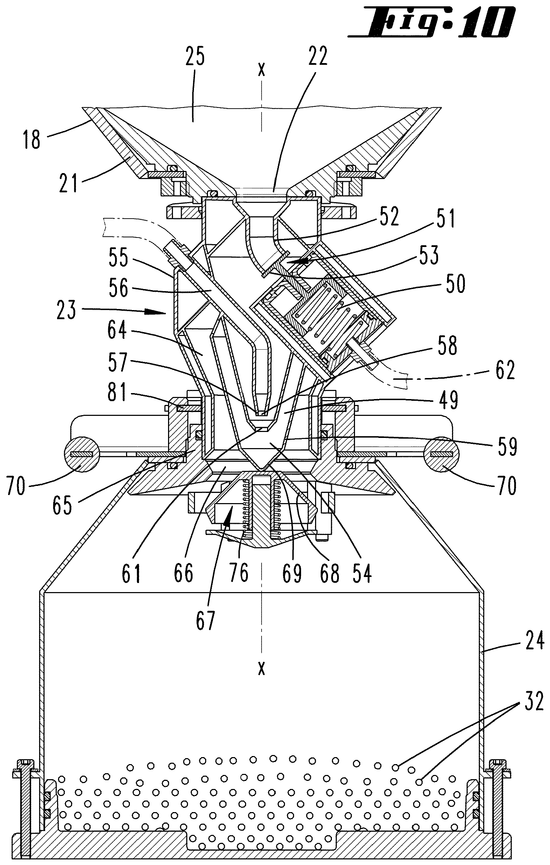

Während des Passivierungsvorganges des abgeschiedenen Filterguts 32 (schematisch dargestellt in den Figuren 8 bis 10) kann die Filtereinrichtung 2 wie vorbeschrieben zur Filterung des durch die Metall-Druckeinrichtung 1 geführten Mediums 7 genutzt werden.

Nach einer gegebenenfalls vorgegebenen Anzahl von Abreinigungs-Zyklen wird die Filtergut-Sammelkammer 24 von der Filtereinrichtung 2 abgenommen und der Inhalt (gesammeltes passiviertes Filtergut 32) einer Entsorgung zugeführt.

Die Sammelkammer 24 kann wandungsaußenseitig, beispielsweise im Bereich des Muffenabschnittes 65 quer zur Längsachse x ausgerichtete stangenartige Handhabungsteile 70 aufweisen. Diese Handhabungsteile 70 können zum Transport der Sammelkammer 24 von Hand oder mittels eines Fahrgeräts 71 dienen. Darüber hinaus kann ein Abschnitt der Handhabungsteile 70 als quer zur Längsachse x schiebeverlagerbare Handhabe 82 ausgebildet sein, zur Einwirkung auf einen der Verrastung der Filtergut-Sammelkammer 24 an dem Reaktorabschnitt 23 dienenden Schiebers 81. Durch Ziehen der Handhabe 82 nach - bezogen auf die Längsachse x - radial außen, ist die Verrastung aufhebbar.

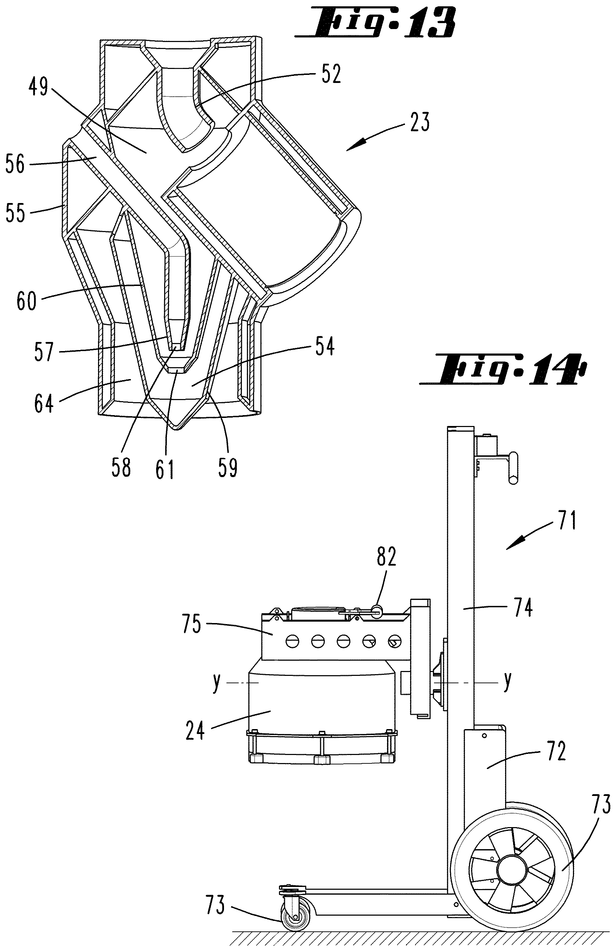

Gemäß den Figuren 14 bis 19 ist ein Transport der von der Filtereinrichtung 2 abgenommenen Sammelkammer 24 unter Nutzung eines staplerartigen Fahrgeräts 71 bevorzugt.

Das Fahrgerät 71 weist bevorzugt ein bodennahes Fahrgestell 72 mit Rädern 73 auf. Auf dem Fahrgestell 72 ist im Wesentlichen vertikal ausgerichtet ein Hubmast 74 befestigt, an welchen entlang, beispielsweise über eine Hubkette angetrieben, im Wesentlichen horizontal ausgerichtete Gabelzinken 75 in Vertikalrichtung verlagerbar angeordnet sind. Die Gabelzinken 75 sind ausgelegt zur sicheren Erfassung der Sammelkammer 24, insbesondere deren Handhabungsteile 70. So kann diesbezüglich beispielsweise mit Erfassen der Handhabungsteile 70 eine Klemmung oder Verrastung gegeben sein.

Wie ersichtlich, erfasst das Fahrgerät 71 gemäß der Darstellung in Figur 14 die Sammelkammer 24 im Bereich der Handhabungsteile 70. Mit dieser Erfassung kann eine gegebenenfalls vorgesehene Verrastung der Sammelkammer 24 an dem Reaktorabschnitt 23 aufgehoben werden, sodass hiernach die Sammelkammer 24 mittels des Fahrgeräts 71 transportiert werden kann.

Im Zuge des Abnehmens der Filtergut-Sammelkammer 24 von dem Reaktorabschnitt 23 verliert der Ventilkegel 68 die Abstützung an dem Niederhalter 69, zufolge dessen das Absperrventil 67 unter Beaufschlagung einer Druckfeder 76 selbsttätig in eine die Kammeröffnung 66 verschließende Stellung fällt.

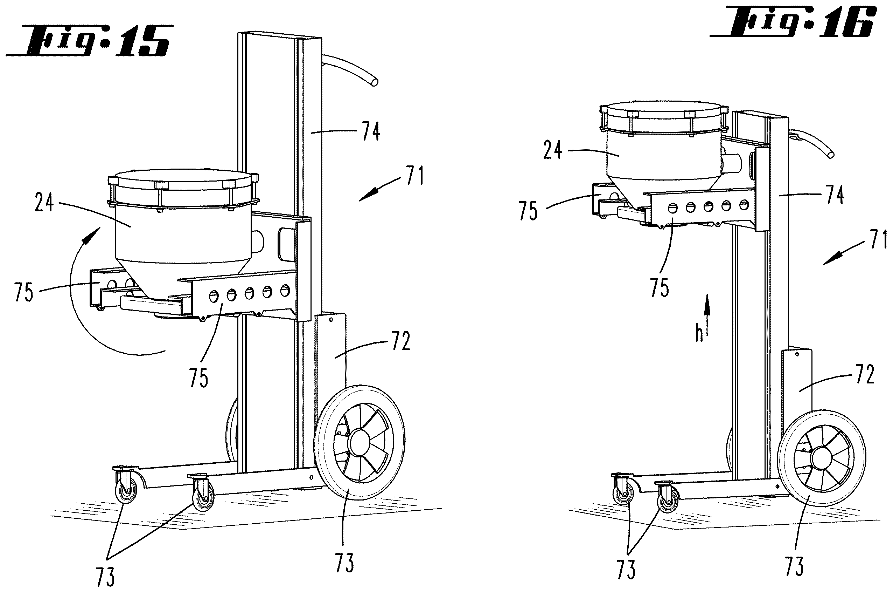

Die Gabelzinken 75 werden zusammen mit der Sammelkammer 24 hiernach um eine quer zur Vertikalerstreckung des Hubmastes 74 gerichtete geometrische Schwenkachse y um bevorzugt 180° geschwenkt, sodass hiernach die Kammeröffnung 66 der Sammelkammer 24 nach unten weist (vergleiche Figur 15).

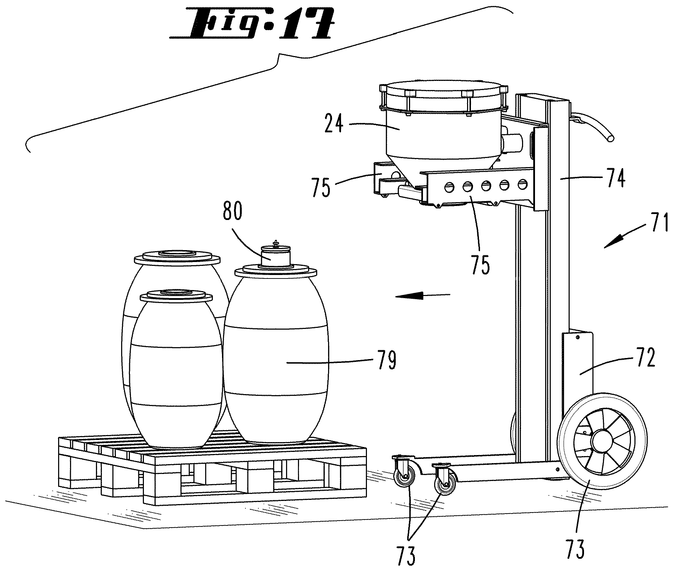

In dieser verschwenkten Stellung kann gegebenenfalls ein Anheben der erfassten Sammelkammer 24 entlang des Hubmastes 74 in Richtung des Pfeils h nach vertikal oben erfolgen (siehe Figur 16), bevor die Zuführung der Sammelkammer 24 zu einem Entsorgungsbehälter 79 gemäß Figur 17 erfolgt.

Der Entsorgungsbehälter 79 ist im Bereich seiner nicht näher dargestellten Einfüllöffnung mit einem rohrartigen Adapterabschnitt 80 versehen, welcher bevorzugt zur dichtenden Zusammenwirkung mit dem Muffenabschnitt 65 der Sammelkammer 24 ausgebildet ist. Bevorzugt ist diesbezüglich die Ermöglichung einer dichten Verbindung, wie diese sich auch zwischen der Sammelkammer 24 und dem Reaktorabschnitt 23 im Wesentlichen ergibt.

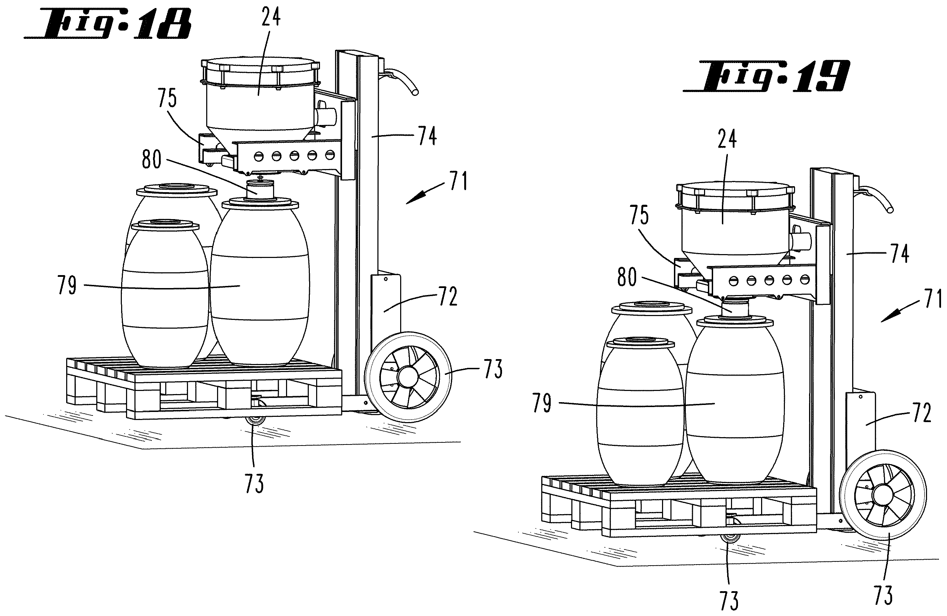

Auf diesen Adapterabschnitt 80 wird gemäß der schematischen Darstellung in Figur 18 durch entsprechendes Heranführen der Sammelkammer 24 unter Nutzung des Fahrgeräts 71 die Sammelkammer 24 angedockt, sodass das in der Sammelkammer 24 aufgenommene Filtergut 32 über die Kammeröffnung 66 in den Entsorgungsbehälter 79 bevorzugt allein schwerkraftabhängig überführt werden kann.

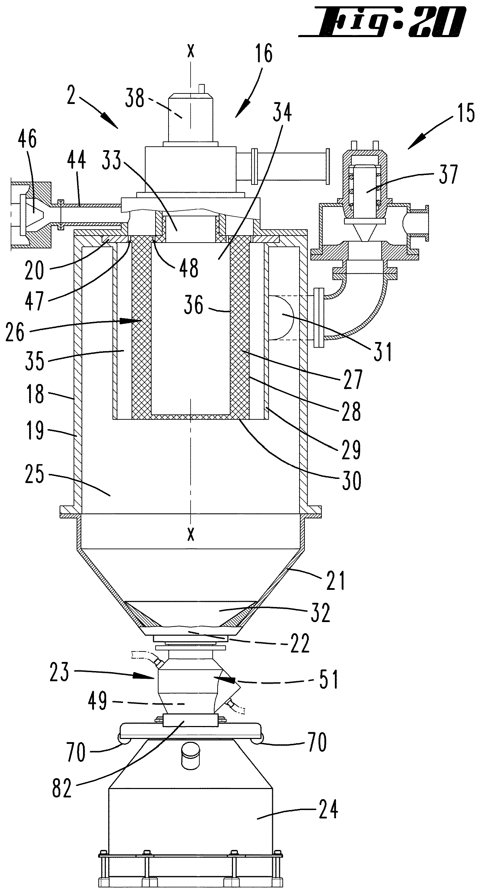

Die entleerte Sammelkammer 24 wird hiernach mittels des Fahrgeräts 71 zurückverbracht zu der Filtereinrichtung 2 und dort wieder an den Reaktorabschnitt 23 angedockt, ohne dass es einer etwaigen weiteren Nachbehandlung der Sammelkammer 24 bedarf (vergleiche Figur 20).

Soweit vorstehend auf Prozessgas Bezug genommen ist, kann bei einer Nutzung der Filtereinrichtung im Zusammenhang mit einem anderen abzureinigenden Medium, also insbesondere einer Nutzung in einem anderen Zusammenhang als mit einer Metall-Druckeinrichtung, das Prozessgas ein sonstiges Medium sein.

**Liste der Bezugszeichen**

| | | | |
|---|---|---|---|
| 1 | Metall-Druckeinrichtung | 29 | Leitwandung |
| 2 | Filtereinrichtung | 30 | Stirnfläche |
| 3 | Filtermodul | 31 | Einlassöffnung |
| 4 | Kabine | 32 | Filtergut |
| 5 | Laservorrichtung | 33 | Auslassöffnung |
| 6 | Tür | 34 | Filterinnenraum |
| 7 | Medium | 35 | Ringraum |
| 8 | Umwälzgebläse | 36 | Innenfläche |
| 9 | Druckleitung | 37 | Sperrventil |
| 10 | Saugleitung | 38 | Sperrventil |
| 11 | Mediumkühler | 39 | Steuerelektronik |
| 12 | Vorabscheider | 40 | - |
| 13 | Feinstfilter | 41 | Vakuumpumpe |
| 14 | Gehäuse | 42 | - |
| 15 | Mediumeinlass | 43 | Spülmediumspeicher |
| 16 | Mediumauslass | 44 | Spülleitung |
| 17 | Saugübergangsleitung | 45 | Spülmedium |
| 18 | Filtergehäuse | 46 | Steuerventil |
| 19 | Gehäusewandung | 47 | Spülmediumeinlass |
| 20 | Gehäusedecke | 48 | Spülmediumeinlass |
| 21 | Gehäuseboden | 49 | Raum |
| 22 | Bodenöffnung | 50 | Druckfeder |
| 23 | Reaktorabschnitt | 51 | Schleusenventil |
| 24 | Filtergut-Sammelkammer | 52 | Kanalabschnitt |
| 25 | Innenraum | 53 | Ventilteller |
| 26 | Filter | 54 | Reaktionskammer |
| 27 | Filterwandung | 55 | Wandung |
| 28 | Außenfläche | 56 | Rohrleitung |
| 57 | Endabschnitt | a | Richtung |
| 58 | Öffnung | b | Richtung |
| 59 | Trichterwandung | c | Richtung |
| 60 | Trichterwandung | d | Richtung |
| 61 | Öffnung | e | Pfeil |
| 62 | Leitung | f | Richtung |
| 63 | Atmosphärenluft | g | Überführungsrichtung |
| 64 | Ringraum | h | Pfeil |
| 65 | Muffenabschnitt | x | Längsachse |
| 66 | Kammeröffnung | y | Schwenkachse |
| 67 | Absperrventil | | |
| 68 | Ventilkegel | | |
| 69 | Niederhalter | | |
| 70 | Handhabungsteil | | |
| 71 | Fahrgerät | | |
| 72 | Fahrgestell | | |
| 73 | Rad | | |
| 74 | Hubmast | | |
| 75 | Gabelzinken | | |
| 76 | Druckfeder | | |
| 77 | Einlass | | |
| 78 | Einlass | | |
| 79 | Entsorgungsbehälter | | |
| 80 | Adapterabschnitt | | |
| 81 | Schieber | | |
| 82 | Handhabe | | |

## Patentansprüche

1. Verfahren zur Abreinigung eines Filters (26) in einer Filtereinrichtung (2) mit einem Filtergehäuse (18) und dem darin befindlichen Filter (26), wobei die Filtereinrichtung (2) eine abnehmbare Filtergut-Sammelkammer (24) aufweist, in welche Filtergut (32), das im Zuge der Abreinigung des Filters (26) anfällt, überführt wird, wobei vor der Filtergut-Sammelkammer (24) in Überführungsrichtung (g) des Filterguts (32) ein abtrennbarer Raum (49) vorgesehen ist, in dem das abgereinigte Filtergut (32) hinsichtlich eines Abbaus von noch vorhandener Reaktivität, einer Passivierung, durch eine Einschleusung von Sauerstoff, behandelt wird, wobei der Sauerstoff in den Raum (49) eingeblasen oder alternativ in den Raum (49) zufolge einer entsprechenden Unterdruck-Beaufschlagung eingesogen wird, wobei eine Verwirbelung des Filterguts (32) in dem Raum (49) vorgenommen wird und die Verwirbelung zugleich mit der Behandlung des Filterguts (32) vorgenommen wird, und wobei eingeschleuste Atmosphärenluft sowohl zur Passivierung des Filtergutes als auch zum Transport in die Sammelkammer durch Ausblasen des Filtergutes aus dem Reaktorraum genutzt wird.

2. Verfahren nach Anspruch 1 **dadurch gekennzeichnet, dass** zu einem Abwerfen von bodenseitig des Filtergehäuses (18) gesammelten Filtergutes (32) in dem Raum (49) über eine Vakuumpumpe (41) und eine Rohrleitung (56) in die Reaktionskammer (54) ein Unterdruck erzeugt wird.

3. Filtereinrichtung (2) mit einem Filtergehäuse (18) und einem darin befindlichen Filter (26), wobei die Filtereinrichtung (2) eine abnehmbare Filtergut-Sammelkammer (24) aufweist, in welche Filtergut (32), das im Zuge der Abreinigung des Filters (26) anfällt, überführbar ist, wobei vor der Filtergut-Sammelkammer (24) in Überführungsrichtung (g) des Filterguts (32) ein abtrennbarer Raum (49) vorgesehen ist, zur Behandlung des abgereinigten Filterguts (32) hinsichtlich eines Abbaus von noch vorhandener Reaktivität, einer Passivierung, wobei weiter die Filtergut-Sammelkammer (24) nach einem Abreinigungszyklus, um den Inhalt einer Entsorgung zuzuführen, von der Filtereinrichtung (2) abnehmbar ist und wobei in den Raum Atmosphärenluft einschleusbar ist, wobei mittels der Atmosphärenluft neben der Passivierung eine Verwirbelung und auch eine Überführung des Filtergutes in die Filtergut-Sammelkammer (24) durchführbar ist.

4. Filtereinrichtung (2) nach Anspruch 3 **dadurch gekennzeichnet, dass** der in einem Reaktorabschnitt (23) ausgebildete Raum (49) eine in Richtung auf die Filtergut-Sammelkammer (24) sich verengende, trichterartige Reaktionskammer (54) formt und dass das gesammelte Filtergut (32) nach einer gesteuerten Freigabe zufolge Öffnen eines Schleusenventils (51) in die Reaktionskammer (54) abwerfbar ist.

5. Filtereinrichtung (2) nach Anspruch 4 **dadurch gekennzeichnet, dass** in die Reaktionskammer (54) eine durch die Wandung des Reaktorabschnitts (23) nach außen geführte Rohrleitung (56) mündet, welche an eine Vakuumpumpe strömungsdicht angeschlossen ist.

## Claims

1. Method for cleaning a filter (26) in a filter device (2) having a filter housing (18) and the filter (26) arranged therein, the filter device (2) having a removable filter-material collecting chamber (24), into which filter material (32) accumulating in the course of cleaning the filter (26) is transferred,
wherein, upstream of the filter-material collecting chamber (24) in a transfer direction (g) of the filter material (32), a separable space (49) is provided in which the cleaned filter material (32) is treated, with regard to reducing still existing reactivity, by way of passivation, by introducing oxygen,
wherein the oxygen is blown into the space (49) or alternatively is drawn into the space (49) as a result of an appropriate application of negative pressure,
wherein a swirling of the filter material (32) is carried out in the space (49) and the swirling is carried out simultaneously with the treatment of the filter material (32), and
wherein introduced atmospheric air is used both for passivation of the filter material and for transport into the collecting chamber by blowing the filter material out of the reactor space.

2. Method according to claim 1, **characterized in that**, for discharging filter material (32) collected at the bottom side of the filter housing (18) into the space (49), a negative pressure is generated in the reaction chamber (54) via a vacuum pump (41) and a pipe line (56).

3. Filter device (2) having a filter housing (18) and a filter (26) arranged therein, the filter device (2) having a removable filter-material collecting chamber (24), into which filter material (32) accumulating in the course of cleaning the filter (26) is transferable,
wherein, upstream of the filter-material collecting chamber (24) in a transfer direction (g) of the filter material (32), a separable space (49) is provided for treating the cleaned filter material (32) with regard to reducing still existing reactivity, by way of passivation,
wherein furthermore, after a cleaning cycle, the filter-material collecting chamber (24) is removable from the filter device (2) in order to feed the contents to a disposal system, and
wherein atmospheric air can be introduced into the space (49), atmospheric air allowing, in addition to passivation, both swirling and also transfer of the filter material into the filter-material collecting chamber (24).

4. Filter device (2) according to claim 3,**characterized in that** the space (49) formed in a reactor section (23) forms a funnel-shaped reaction chamber (54) which narrows in the direction of the filter-material collecting chamber (24), and **in that** the collected filter material (32) can be discharged into the reaction chamber (54) after controlled release as a result of opening of a lock valve (51).

5. Filter device (2) according to claim 4, **characterized in that** a pipe line (56) which is guided through the wall of the reactor section (23) to the outside opens into the reaction chamber (54), said pipe line (56) being connected in a fluid-tight manner to a vacuum pump.

## Revendications

1. Procédé de nettoyage d'un filtre (26) dans un dispositif de filtration (2) comportant un boîtier de filtre (18) et le filtre (26) disposé à l'intérieur de celui ci, le dispositif de filtration (2) comportant une chambre de collecte de matière filtrée amovible (24) dans laquelle est transférée la matière filtrée (32) qui s'accumule au cours du nettoyage du filtre (26), **caractérisé en ce qu'**en amont de la chambre de collecte de matière filtrée (24), dans une direction de transfert (g) de la matière filtrée (32), est prévu un espace séparable (49) dans lequel la matière filtrée (32) nettoyée est traitée, en vue de réduire une réactivité encore présente, par passivation, par introduction d'oxygène, **en ce que** l'oxygène est soufflé dans l'espace (49) ou, à titre alternatif, aspiré dans l'espace (49) par application appropriée d'une pression négative, **en ce qu'**un brassage de la matière filtrée (32) est réalisé dans l'espace (49) et le brassage est réalisé simultanément avec le traitement de la matière filtrée (32), et **en ce que** l'air atmosphérique introduit est utilisé à la fois pour la passivation de la matière filtrée et pour le transport de celle ci dans la chambre de collecte par expulsion de la matière filtrée hors de l'espace de réaction.

2. Procédé selon la revendication 1, **caractérisé en ce que**, pour déverser dans l'espace (49) la matière filtrée (32) collectée sur le côté inférieur du boîtier de filtre (18), une pression négative est générée dans la chambre de réaction (54) au moyen d'une pompe à vide (41) et d'une conduite (56).

3. Dispositif de filtration (2) comportant un boîtier de filtre (18) et un filtre (26) disposé à l'intérieur de celui ci, le dispositif de filtration (2) comportant une chambre de collecte de matière filtrée amovible (24) dans laquelle peut être transférée la matière filtrée (32) qui s'accumule au cours du nettoyage du filtre (26), **caractérisé en ce qu'**en amont de la chambre de collecte de matière filtrée (24), dans une direction de transfert (g) de la matière filtrée (32), est prévu un espace séparable (49) destiné à traiter la matière filtrée (32) nettoyée en vue de réduire une réactivité encore présente, par passivation, **en ce qu'**en outre, après un cycle de nettoyage, la chambre de collecte de matière filtrée (24) est amovible du dispositif de filtration (2) afin d'acheminer son contenu vers un dispositif d'élimination, et **en ce que** de l'air atmosphérique peut être introduit dans l'espace (49), l'air atmosphérique permettant, outre la passivation, à la fois le brassage et également le transfert de la matière filtrée dans la chambre de collecte de matière filtrée (24).

4. Dispositif de filtration (2) selon la revendication 3, **caractérisé en ce que** l'espace (49) formé dans une section de réacteur (23) forme une chambre de réaction (54) en forme d'entonnoir qui se rétrécit dans la direction de la chambre de collecte de matière filtrée (24), et **en ce que** la matière filtrée (32) collectée peut être déversée dans la chambre de réaction (54) après une libération commandée résultant de l'ouverture d'un clapet de sas (51).

5. Dispositif de filtration (2) selon la revendication 4, **caractérisé en ce qu'**une conduite (56), guidée à travers la paroi de la section de réacteur (23) vers l'extérieur, débouche dans la chambre de réaction (54), ladite conduite (56) étant raccordée de manière étanche au fluide à une pompe à vide.
